# EUROPEAN PATENT APPLICATION

(11) **EP 3 996 268 A1**
(43) Date of publication of application: **11.05.2022**
(21) Application number: 19936540.4
(22) Date of filing: 04.07.2019
(51) Int. Cl.: H02M 7/48

(54) **POWER CONVERSION DEVICE**

(71) Applicant: HITACHI INDUSTRIAL EQUIPMENT SYSTEMS CO., LTD., Tokyo 101-0022 (JP)
(72) Inventor: MASUYAMA, Sho, Tokyo 101-0022 (JP); TANABE, Keisuke, Tokyo 101-0022 (JP); SATO, Fumihiro, Tokyo 101-0022 (JP); YAGIHARA, Shigetoshi, Tokyo 101-0022 (JP); HIRAGA, Masahiro, Tokyo 101-0022 (JP)
(74) Representative: MERH-IP Matias Erny Reichl Hoffmann Patentanwälte PartG mbB
(86) International application number: PCT/JP2019/026581
(87) International publication number: WO 2021/001981

(57) **Abstract**

This power conversion device has: a smoothing capacitor for smoothing an output voltage from the outside; an AC inversion unit for inverting the DC power of the smoothing capacitor to AC power; a control unit for controlling the AC inversion unit; a DC voltage detection unit for detecting the DC voltage of the smoothing capacitor; and a display unit for displaying the presence or absence of the charged voltage of the smoothing capacitor to the outside. The DC voltage detection unit has a constant voltage unit.

## Description

### TECHNICAL FIELD

The present invention relates to a power conversion device.

### BACKGROUND ART

In general, a power conversion device converts a DC voltage into an arbitrary three-phase AC voltage based on a gate drive command by combining ON/OFF of a plurality of switching elements (IGBTs). The power conversion device includes a DC conversion circuit that converts AC power into DC power and a smoothing capacitor that smoothes a DC voltage output of the DC conversion circuit.

In addition, the power conversion device includes a DC voltage detection circuit that detects a DC voltage to control an AC voltage output, and a display that indicates, to the outside, that the power conversion device is energized or the presence or absence of a charged voltage for the smoothing capacitor.

Paragraph No. 0030 of Patent Document 1 states that, "As illustrated in Fig. 4, each power converter 10 has, on the mounting surface 10a, a display 19 that indicates the presence or absence of a DC voltage at one input/output terminal 11. For example, the display 19 is preferably realized by a light-emitting element such as an LED. Note that to control display content on the display 19, the power converter 10 may incorporate a circuit that detects the presence or absence of a DC voltage in the one input/output terminal 11".

### CITATION LIST

### PATENT DOCUMENT

Patent Document 1: JP 2018-68031 A

### SUMMARY OF THE INVENTION

### PROBLEMS TO BE SOLVED BY THE INVENTION

In Patent Document 1, even though the display is described, a display lighting circuit that detects the presence or absence of a DC voltage and turns ON the light-emitting element is not specified.

In general, the display lighting circuit includes a current limiting resistor and the light-emitting element (mainly an LED). When the display lighting circuit is used in a part where a high DC voltage is applied, the number of parts such as a resistor increases in order to ensure a current limit and a withstand voltage, and the size of the parts increases. Therefore, the area of a substrate on which the display lighting circuit is mounted increases.

Further, the display lighting circuit is disposed at a position that can be visually recognized by a user. On the other hand, the DC voltage detection circuit that detects the DC voltage of the smoothing capacitor is disposed at a position away from the display lighting circuit.

The display lighting circuit may be disposed in the DC voltage detection circuit to also serve as a resistor, thereby reducing the number of resistors and reducing the size. However, there is a problem that a DC voltage detection signal of the DC voltage detection circuit is easily affected by disturbance.

An object of the invention is to provide a power conversion device including a display unit for displaying the presence or absence of a DC voltage and reducing an influence of external noise received by a DC voltage detection signal.

### SOLUTIONS TO PROBLEMS

A preferred example of the invention is a power conversion device including a smoothing capacitor for smoothing an output voltage from an outside, an AC inversion unit for inverting DC power of the smoothing capacitor into AC power, a control unit for controlling the AC inversion unit, a DC voltage detection unit for detecting a DC voltage of the smoothing capacitor, and a display unit for displaying presence or absence of a charged voltage of the smoothing capacitor to the outside, in which the DC voltage detection unit includes a constant voltage unit.

### EFFECTS OF THE INVENTION

According to the invention, it is possible to realize a power conversion device including a display unit for displaying the presence or absence of a DC voltage and reducing an influence of external noise received by a DC voltage detection signal.

### BRIEF DESCRIPTION OF THE DRAWINGS

Fig. 1 is a diagram illustrating an appearance of a power conversion device in a first embodiment.
Fig. 2 is an exploded perspective view of a main body of the power conversion device in the first embodiment.
Fig. 3 is a schematic configuration diagram of the power conversion device in the first embodiment.
Fig. 4 is a circuit block diagram and a structural diagram of the power conversion device in the first embodiment.
Fig. 5 is a schematic configuration diagram of a power conversion device in a comparative example.
Fig. 6 is a circuit block diagram and a structural diagram of the power conversion device in the comparative example.

### MODE FOR CARRYING OUT THE INVENTION

First, a comparative example will be described before an embodiment is described.

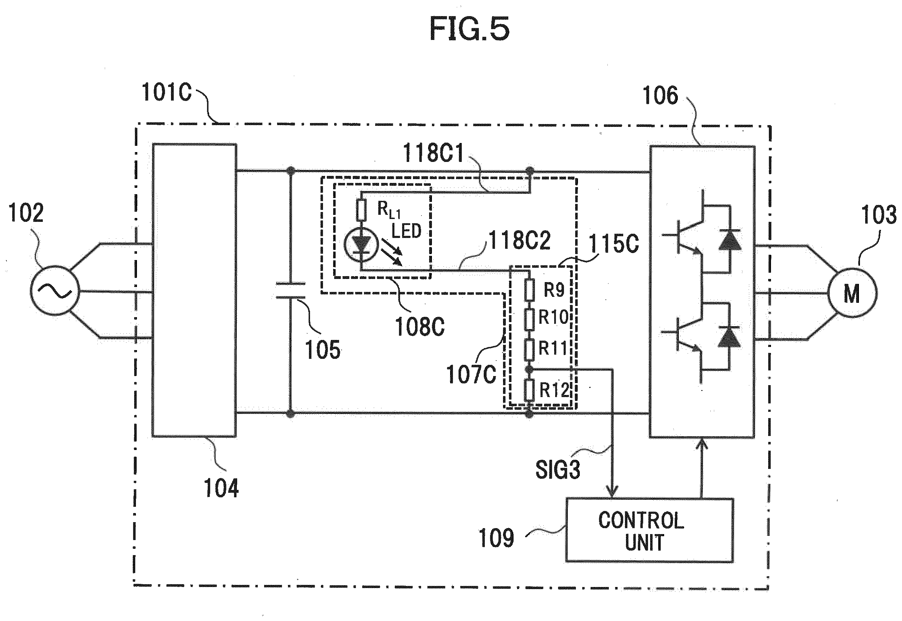

Fig. 5 is a diagram of a power conversion device 101C in a comparative example. As illustrated in Fig. 5, the power conversion device 101C that receives power supplied from an AC power supply 102 and drives an AC electric motor 103 includes a DC conversion unit 104 that converts an AC voltage supplied from the AC power supply 102 into a DC voltage, a smoothing capacitor 105 that smoothes an output of the DC conversion unit 104, and an AC inversion unit 106 that outputs an AC voltage using a DC voltage smoothed by the smoothing capacitor 105.

A control unit 109 that controls the AC inversion unit 106 has a function of adjusting a control signal output to the AC inversion unit 106 using a DC voltage detection signal SIG3 divided by a DC voltage detection unit 107C that detects a DC voltage output of the smoothing capacitor 105.

Further, a display unit 108C for displaying an energized state or a charging voltage state of the DC voltage output of the smoothing capacitor 105 is connected in series with a voltage dividing unit 115C including resistors R9, R10, R11, and R12 inside the DC voltage detection unit 107C.

The DC voltage detection unit 107C outputs a voltage value obtained by dividing the DC voltage output of the smoothing capacitor 105 using the display unit 108C and the voltage dividing unit 115C to the control unit 109 as the DC voltage detection signal SIG3. It is desirable to wire the DC voltage detection unit 107C in a shortest distance in order to reduce an influence of noise.

The display unit 108C includes a light-emitting element LED and a current limiting resistor RL1. The display unit 108C is connected in series with the voltage dividing unit 115C inside the DC voltage detection unit 107C. The display unit 108C detects a state of the DC voltage output of the smoothing capacitor 105 and turns ON the light-emitting element LED. The light-emitting element LED is disposed at a position that can be visually recognized by the user of the power conversion device 101C. The current limiting resistor RL1 limits a current flowing through the light-emitting element LED.

In the comparative example illustrated in Fig. 5, since the display unit 108C is connected in series with the voltage dividing unit 115C so as to form a part of the DC voltage detection unit 107C, resistors R9, R10, R11, and R12 included in the voltage dividing unit 115C also function as resistors that limit a current of the light-emitting element LED.

Therefore, for example, when the display unit is disposed in parallel with the smoothing capacitor 105, a current limiting resistor is not also used and is disposed in the display unit separately from the DC voltage detection unit. When compared to such a case, a configuration of Fig. 5 can reduce the current limiting resistors and contribute to miniaturization.

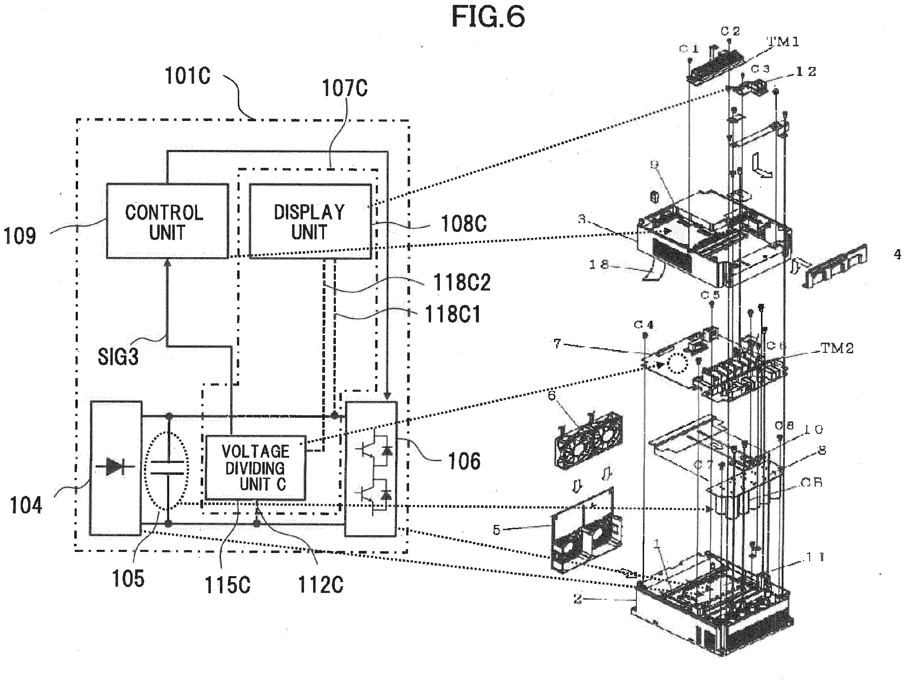

Fig. 6 illustrates a relationship between a physical arrangement of circuit blocks of the power conversion device 101C and wiring in the comparative example.

In Fig. 6, the display unit 108C is disposed in an upper part of the power conversion device 101C, and the DC conversion unit 104, the smoothing capacitor 105, the AC inversion unit 106, and the voltage dividing unit 115C are disposed in a lower part of the power conversion device 101C.

Therefore, a wiring 118C1 and a wiring 118C2 connecting the display unit 108C need to have a long wiring length, which has a drawback that the DC voltage detection signal SIG3 is easily affected by disturbance noise.

Since the DC voltage detection signal SIG3 is used when the control unit 109 controls the AC inversion unit 106, an influence of disturbance noise on the DC voltage detection signal SIG3 affects the control of the AC inversion unit 106, which is not preferable.

Further, since the display unit 108C is connected in series with the voltage dividing unit 115C as a part of the DC voltage detection unit 107C, a drop characteristic of a voltage across the display unit 108C affects the DC voltage detection signal SIG3, which is not preferable.

Hereinafter, embodiments of the invention will be described with reference to the drawings.

### First embodiment

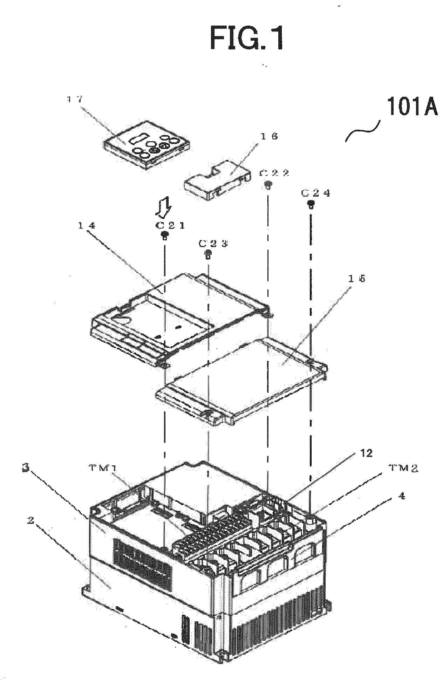

Fig. 1 is a diagram illustrating an appearance of a power conversion device 101A in a first embodiment, and is a diagram when a front side of the power conversion device 101A is directed upward. On the front side, an operation operator 17, a spacer 16, a front cover A14, a front cover B15, and a display unit LED mounting board 12 are provided.

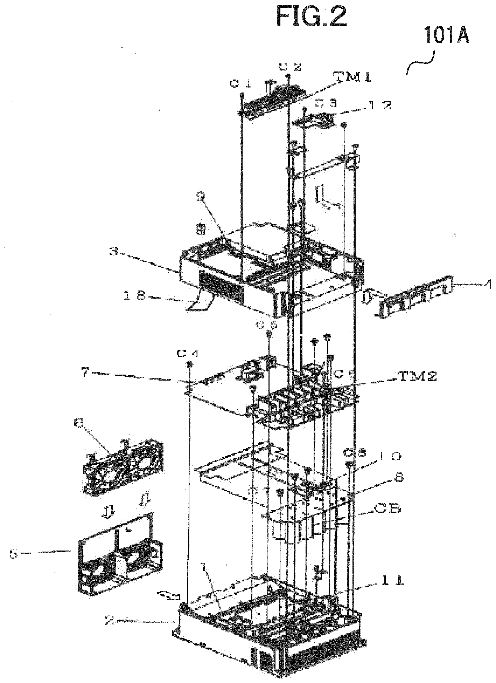

Fig. 2 is a perspective view of the power conversion device 101A when a front portion of a case 3 is directed upward. As illustrated in Fig. 2, the power conversion device 101A includes a cooling fin 1, a cooling fin cover 2, the case 3, a wire outlet semi-closed cover 4, a cooling fan case 5, and a cooling fan 6.

Further, the power conversion device 101A includes a main board 7 including a driver circuit, a power supply circuit, etc., a smoothing capacitor mounting board 8 on which a smoothing capacitor (CB) 105 is mounted, a control board 9 on which a control circuit is mounted, a copper bar 10 for power wiring, and the display unit LED mounting board 12 on which a display LED is mounted.

The cooling fin 1 is equipped with a module 11 incorporating a power semiconductor element. A light-emitting element LED of a display unit 108A needs to be installed in a portion that can be visually recognized by the user of the power conversion device 101A, and thus is disposed on the display unit LED mounting board 12 illustrated in Fig. 2.

At this time, the DC voltage output of the smoothing capacitor mounting board 8 is connected by the copper bar 10 for power wiring near a connection point between the main board 7 and the module 11 in order to achieve the purpose of stabilizing a DC voltage of the module 11. Therefore, the wiring length to the light-emitting element LED disposed at a position different from that of the main board 7 becomes long.

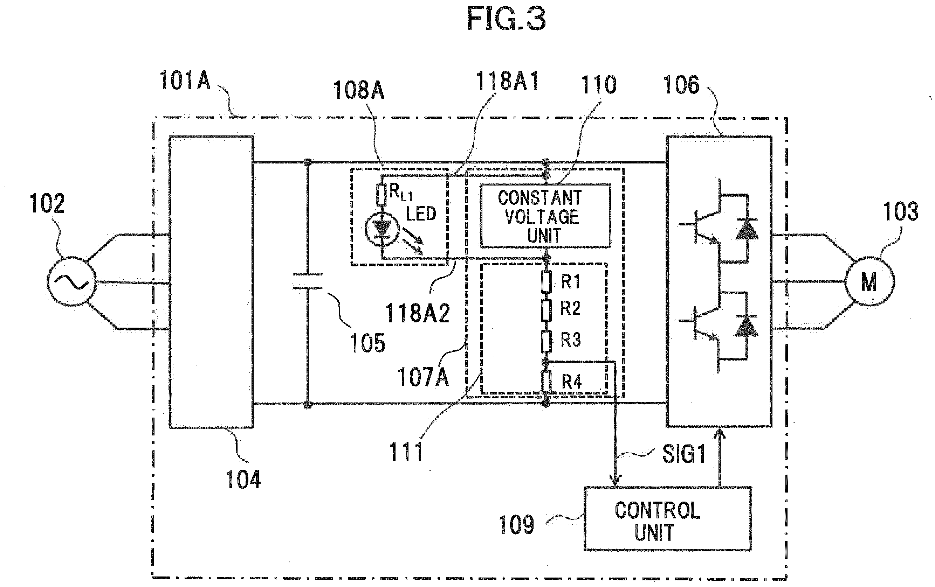

Fig. 3 illustrates an overall configuration in which the power conversion device 101A, the AC power supply 102, and the AC electric motor 103 are connected in the embodiment.

In Fig. 3, the power conversion device 101A includes a DC conversion unit 104, a smoothing capacitor 105, an AC inversion unit 106, a DC voltage detection unit 107A, the display unit 108A, and a control unit 109.

In the present embodiment, the DC conversion unit 104 and the AC inversion unit 106 are incorporated in the module 11 of Fig. 2. Note that the DC conversion unit 104 and the AC inversion unit 106 do not have to have an integrated structure as in the module 11 of Fig. 2.

The AC power supply 102 is, for example, an AC voltage supplied from an electric power company or an AC voltage supplied from a generator, and is supplied to the DC conversion unit 104.

The DC conversion unit 104 includes, for example, a DC conversion circuit including a diode rectifier circuit or a DC conversion circuit using an IGBT and a flywheel diode, converts an AC voltage input from the AC power supply 102 into a DC voltage, and outputs the converted DC voltage to the smoothing capacitor 105. Further, an adjusting unit for raising and lowering a DC voltage may be included on both or one of an input side and an output side of the smoothing capacitor 105.

The smoothing capacitor 105 smoothes the DC voltage input from the DC conversion unit 104, and outputs the DC voltage to the AC inversion unit 106. Further, when the power supply is not the AC power supply 102 but a DC voltage power supply, the DC voltage may be supplied to the smoothing capacitor 105 from the DC voltage power supply without passing through the DC conversion unit 104.

The AC inversion unit 106 includes, for example, an AC inversion circuit using an IGBT and a flywheel diode, receives the DC voltage output of the smoothing capacitor 105 and an output command of the control unit 109 as inputs, inverts the DC voltage into an AC voltage, and outputs the inverted AC voltage to the AC electric motor 103.

The DC voltage detection unit 107A includes a constant voltage unit 110 and a DC voltage interlocking unit 111 that changes in conjunction with, for example, a DC voltage output of the smoothing capacitor 105 including voltage dividing resistors R1, R2, R3, and R4 (the number of voltage dividing resistors is not limited), and the constant voltage unit 110 and the DC voltage interlocking unit 111 are connected in series.

The DC voltage detection unit 107A is connected to both output ends of the smoothing capacitor 105 and divides a DC voltage across the smoothing capacitor 105 by the constant voltage unit 110 and the DC voltage interlocking unit 111, and the DC voltage interlocking unit 111 outputs the divided voltage to the control unit 109 as a DC voltage detection signal SIG1. In this instance, it is desirable to wire the DC voltage detection unit 107A in a shortest distance in order to reduce the influence of disturbance, and it is desirable to wire the DC voltage detection signal SIG1 in a shortest distance.

The constant voltage unit 110 is connected in parallel to the display unit 108A, and keeps a voltage between both terminals of the constant voltage unit 110 constant. The constant voltage unit 110 uses an element capable of outputting a constant voltage, such as a Zener diode or a shunt regulator.

An insertion position of the constant voltage unit 110 is not limited to a position of Fig. 3, and may be a position where an influence on the DC voltage detection signal SIG1 is synonymous, for example, between the resistor R1 and the resistor R2, or between the resistor R2 and the resistor R3.

The DC voltage interlocking unit 111 divides a voltage value obtained by subtracting a constant voltage output of the constant voltage unit 110 from the DC voltage output across the smoothing capacitor 105, and outputs the DC voltage detection signal SIG1 to the control unit 109.

The control unit 109 outputs a control signal to the AC inversion unit 106 using the DC voltage detection signal SIG1 which is an output of the DC voltage detection unit 107A.

The AC inversion unit 106 receives a control signal of the control unit 109 and outputs an AC voltage according to the control signal.

In Fig. 3, as an example, the display unit 108A is illustrated as a configuration using the light-emitting element LED. The display unit 108A includes the light-emitting element LED and the current limiting resistor RL1 that limits a current flowing through the light-emitting element LED.

The display unit 108A is connected in parallel with the constant voltage unit 110. The display unit 108A turns ON the light-emitting element LED according to the output voltage across the constant voltage unit 110. The light-emitting element LED is disposed at a position that can be visually recognized by the user of the power conversion device 101A.

The current limiting resistor RL1 limits the current flowing through the light-emitting element LED. Since the display unit 108A determines a value of a current flowing through the light-emitting element LED by the current limiting resistor RL1 using a constant voltage supplied from the constant voltage unit 110, a light-emitting state of the light-emitting element LED is stable. The number of current limiting resistors RL1 is not limited, and is appropriately adjusted according to an operating condition of the light-emitting element LED, etc.

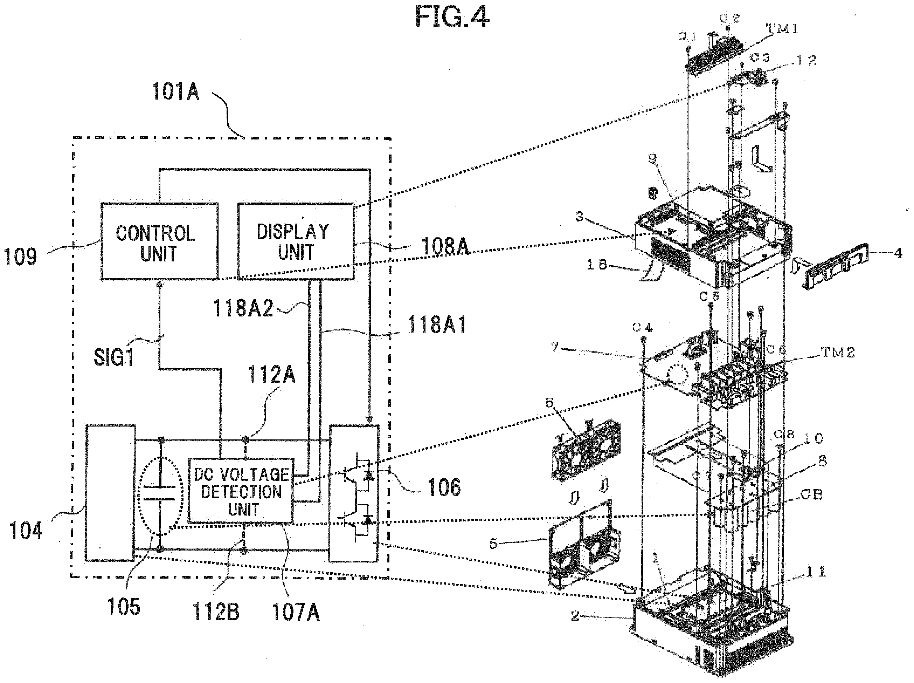

Fig. 4 illustrates a relationship between a physical arrangement of circuit blocks of the power conversion device 101A and wiring in the embodiment. In Fig. 4, the DC conversion unit 104, the smoothing capacitor 105, the AC inversion unit 106, and the DC voltage detection unit 107A are disposed in a the lower part in a diagram of the power conversion device 101A, that is, on a back side of the power conversion device 101A. The DC voltage detection unit 107A is disposed on the main board 7.

Further, the display unit 108A and the control unit 109 are disposed in the upper part of the power conversion device 101A, that is, on the front side of the power conversion device 101A. The display unit 108A is mounted on the display unit LED mounting board 12, and the control unit 109 is mounted on the control board 9.

In summary, the display unit 108A is disposed on the front side of the power conversion device 101A, and the DC voltage detection unit 107A, the smoothing capacitor 105, the DC conversion unit 104, and the AC inversion unit 106 are disposed on the back side.

In the present embodiment, a wiring 118A1 and a wiring 118A2 to the display unit 108A can be separated from the DC voltage detection unit 107A. The DC voltage detection unit 107A is wired with respect to the smoothing capacitor 105 and the AC inversion unit 106 using a wiring 112A and a wiring 112B, respectively.

When compared to the similar wiring 118C1 and wiring 112C in the DC voltage detection unit 107C of Fig. 6, which is the comparative example, the wiring 112A and the wiring 112B can be wired in a shorter distance. Since the wiring can be shortened, the DC voltage detection signal SIG1 with reduced influence from disturbance can be output to the control unit 109. Further, since the display unit 108A is connected in parallel with the constant voltage unit 110, the light-emitting state of the light-emitting element LED can be stabilized.

Further, since the display unit 108A is disposed in parallel with the smoothing capacitor 105, it is conceivable that the resistor for current limiting is disposed in the display unit without also serving as a resistor of the DC voltage detection unit. When compared to such a case, according to the present embodiment, the current limiting resistor of the display unit 108A can be reduced, so that an increase in the circuit area can be suppressed.

In addition, by connecting the constant voltage unit 110 to the display unit 108A in parallel, it is possible to shorten the wiring length between the constant voltage unit 110 and the DC voltage interlocking unit 111 included in the DC voltage detection unit 107A and a wiring between both ends of the DC voltage detection unit 107A and the both output ends of the smoothing capacitor 105, and the wirings (118A1 and 118A2) drawing out only the light-emitting element LED of the display unit 108A to a visible portion become possible.

In the comparative example of Fig. 5, when the DC voltage detection unit 107C is configured by connecting the display unit 108C and the voltage dividing resistors R9, R10, RR11, and R12 in series, an influence of external noise on the lead wires (118C1 and 118C2) to the light-emitting element LED of the display unit 108C occurs in the DC voltage detection unit 107C, which affects the DC voltage detection signal SIG3.

On the other hand, in the present embodiment, the influence of the external noise on the wirings 118A1 and 118A2 is suppressed by the constant voltage unit 110, so that the influence of the external noise generated by the DC voltage detection signal SIG1 is reduced. In this way, the light-emitting element LED of the display unit 108A can be freely disposed, and the stable DC voltage detection signal SIG1 can be output to the control unit 109.

The power conversion device 101A in the above embodiment can be applied as a power conversion device such as a general-purpose inverter, a servo amplifier, or a DCBL controller.

### REFERENCE SIGNS LIST

- 101A: Power conversion device
- 102: AC power supply
- 103: AC electric motor
- 104: DC conversion unit
- 105: Smoothing capacitor
- 106: AC inversion unit
- 107A: DC voltage detection unit
- 108A: Display unit

- 109: Control unit
- 110: Constant voltage unit
- 111: DC voltage interlocking unit

## Claims

1. A power conversion device comprising:
a smoothing capacitor for smoothing an output voltage from an outside;
an AC inversion unit for inverting DC power of the smoothing capacitor into AC power;
a control unit for controlling the AC inversion unit;
a DC voltage detection unit for detecting a DC voltage of the smoothing capacitor; and
a display unit for displaying presence or absence of a charged voltage of the smoothing capacitor to the outside,
wherein the DC voltage detection unit includes a constant voltage unit.

2. The power conversion device according to claim 1, wherein the DC voltage detection unit has a configuration in which the display unit and the constant voltage unit are connected in parallel.

3. The power conversion device according to claim 1, wherein the DC voltage detection unit includes a DC voltage interlocking unit changing in conjunction with a charged voltage of the smoothing capacitor.

4. The power conversion device according to claim 1, wherein the constant voltage unit is a Zener diode or a shunt regulator.

5. The power conversion device according to claim 2, wherein the display unit includes a light-emitting element and a resistor for limiting a current flowing through the light-emitting element.

6. The power conversion device according to claim 3, wherein the DC voltage interlocking unit is connected to the constant voltage unit and outputs, to the control unit, a detection signal of the DC voltage obtained by dividing a voltage obtained by subtracting a voltage output of the constant voltage unit from a DC voltage output across the smoothing capacitor.

7. The power conversion device according to claim 1,
wherein the display unit is disposed on a front side, and
the DC voltage detection unit, the smoothing capacitor, and the AC inversion unit are disposed on a back side.

8. The power conversion device according to claim 7, wherein the display unit is mounted on a light-emitting element mounting board, and the control unit is mounted on a control board.

9. The power conversion device according to claim 7,
wherein the AC inversion unit is incorporated in a module, and
the module is mounted on a cooling fin.

10. The power conversion device according to claim 2, wherein the DC voltage detection unit is wired to the smoothing capacitor and the AC inversion unit.

11. The power conversion device according to claim 1, further comprising
a DC conversion unit for converting an input AC into a DC voltage.

12. The power conversion device according to claim 1, wherein a DC voltage is input from a DC voltage power supply.
